**Europäisches Patentamt**

**European Patent Office**

**Office européen des brevets**

(11) Veröffentlichungsnummer: **0 130 271**
A1

# EUROPÄISCHE PATENTANMELDUNG

(21) Anmeldenummer: **84100815.4**

(51) Int. Cl.⁴: **B 01 D 33/00**, B 01 D 33/26

(22) Anmeldetag: **26.01.84**

(30) Priorität: **03.06.83 DE 3320209**

(43) Veröffentlichungstag der Anmeldung: **09.01.85**
**Patentblatt 85/2**

(84) Benannte Vertragsstaaten: **AT BE CH DE FR GB IT LI LU NL SE**

(71) Anmelder: **Uhde GmbH, Friedrich-Uhde-Strasse 15, D-4600 Dortmund 1 (DE)**

(72) Erfinder: **Körner, Jörg-Peter, Dipl.-Ing., Baurothstrasse 7, D-5800 Hagen 1 (DE)**
Erfinder: **Koll, Gregor, Dipl.-Ing., Auf dem Birnbaum 25, D-5800 Hagen 1 (DE)**
Erfinder: **Saamer, Peter, Dipl.-Ing., Letteweg 36, D-5860 Iserlohn-Hennen (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

(54) Gehäuse für ein Druckgefäss, insbesondere für einen Druckrotationsfilter.

(57) Bei einem Gehäuse für ein Druckgefäß, insbesondere für einen Druckrotationsfilter mit einem abnehmbaren Deckel zum Ausbau der im Behälter befindlichen Elemente, soll eine Lösung geschaffen werden, mit der die Gehäusekonstruktion vereinfacht wird, die Toträume weitestgehend vermeidet und insbesondere eine mit einem derartigen Gehäuse versehene Vorrichtung leicht montiert und demontiert werden kann. Dies wird dadurch erreicht, daß das Gehäuse (2) aus einem zylindrischen Mantel (3) und einem am zylindrischen Mantel festlegbaren oberen und unteren Deckel (4 bzw. 5) mit wenigstens bereichsweise zum Behälterinneren gerichteter Wölbung ausgebildet ist.

"Gehäuse für ein Druckgefäß, insbesondere für
einen Druckrotationsfilter"

Die Erfindung richtet sich auf ein Gehäuse für ein
Druckgefäß, insbesondere für einen Druckrotationsfilter
mit einem abnehmbaren Deckel zum Ausbau der im Behälter
befindlichen Elemente.

Aus der DE-PS 25 52 515 der Anmelderin ist ein Druck-rotationsfilter mit Horizontal-Filterplatten bekannt, dessen im wesentlichen einstückiger Behälter am oberen Rand von einem nach außen gewölbten Deckel verschlossen ist, der mit der Suspensionszuführleitung versehen ist. Dieser nach außen gewölbte Deckel trägt ein Lager der Filterwelle, während im ebenfalls nach außen gewölbten Behälterboden das untere Lager angeordnet ist. Gleichzeitig ist in diesem Bereich die Filtratabzugsöffnung vorgesehen. Darüber hinaus weist der Boden des Druckgefäßes noch eine Öffnung zum Abzug des Filterkuchens auf. Diese bekannte Ausgestaltung des Druckrotationsfilters hat bereits eine Reihe von Vorteilen, insbesondere die schnelle Lösung des oberen Deckels. Allerdings weist ein derartiges Druckgefäß auch eine Reihe von Nachteilen auf, insbesondere den Nachteil, daß eine Vielzahl von Toträumen vorhanden ist. Auch ist nicht gewährleistet, daß der abgeschleuderte Filterkuchen aus dem unteren Bereich des Behälterbodens vollständig entfernt werden kann. Darüber hinaus ist die Konstruktion des Gehäuses besonders aufwendig.

Aufgabe der Erfindung ist die Schaffung einer Lösung, mit der die Gehäusekonstruktion vereinfacht wird, die Toträume weitestgehend vermeidet und insbesondere eine mit einem derartigen Gehäuse versehene Vorrichtung leicht montiert und demontiert werden kann.

Diese Aufgabe wird gemäß der Erfindung dadurch gelöst, daß das Gehäuse aus einem zylindrischen Mantel und einem am zylindrischen Mantel festlegbaren oberen und unteren Deckel mit wenigstens bereichsweise zum Behälterinneren gerichteter Wölbung ausgebildet ist.

Die erfindungsgemäße Konstruktion des Gehäuses aus einem Mantel und wenigstens bereichsweise nach innen gerichteten oberen und unteren Deckeln macht es möglich, daß z. B. der Mantel aus einem Druckrohr gefertigt werden kann und z. B. die beiden Deckel als völlig baugleiche Bauelemente, z. B. als Gesenkschmiedeteile, ausbildbar sind. Die nach innen gerichteten Wölbungen ermöglichen es, wenigstens die Lagerbereiche der Filterwelle oder der sonstigen Einbauten so anzuordnen, daß dort Ablagerungen vermieden werden.

In Ausgestaltung sieht die Erfindung vor, daß der obere und untere Behälterboden konkav gewölbt sind und in ihrem Wölbungsmittelpunkt das Lager für die Filterwelle tragen.

Grundsätzlich ist ein unterer Behälterboden aus dem DE-GM 6 752 108 mit nach innen gerichteter Wölbung bekannt. Allerdings ist dort ein unterer doppelter Behälterboden beschrieben, durch den die Einführung der Suspension gewährleistet sein soll. Bei dieser bekannten Konstruktion fehlt ein oberer Deckel. Auch ist diese Konstruktion nicht zum möglichst einfachen Ausbau des Filterpaketes geeignet, insbesondere schon deswegen, weil sie im oberen Bereich alle Antriebsaggregate vorsieht.

Nach der Erfindung kann auch vorgesehen sein, daß im unteren Boden die Austrittsöffnung für den Filterkuchen vorgesehen ist. Ebenso wie bei der DE-PS 25 52 515 ist auch bei dem DE-GM 6 752 108 diese Austrittsöffnung im Übergangsbereich von der gewölbten Bodenfläche in den zylindrischen Wandbereich vorgesehen, was konstruktiv vergleichsweise aufwendig ist. Dies vermeidet die erfindungsgemäße Ausgestaltung.

Da in glatte Zylinderwände Bohrungen einfach einzubringen sind, kann nach der Erfindung in weiterer Ausgestaltung vorgesehen sein, daß im oberen Bereich des Behältermantels die Anschlußstutzen für die Suspensionszuführleitung, die Entlüftung u. dgl. angeordnet sind. Wie allerdings weiter oben bereits kurz erwähnt, können insbesondere dann, wenn

Boden und Deckel baugleich ausgeführt sind, diese Leitungen auch im Deckel angeordnet sein, so daß in einem solchen Falle der Mantel völlig bohrungsfrei ausgeführt werden könnte. So könnten z. B. die Suspensionszuführleitungen an die Öffnung im Deckel angeschlossen werden, die im Boden die Filterkuchenaustragsöffnung bildet u. dgl. mehr.

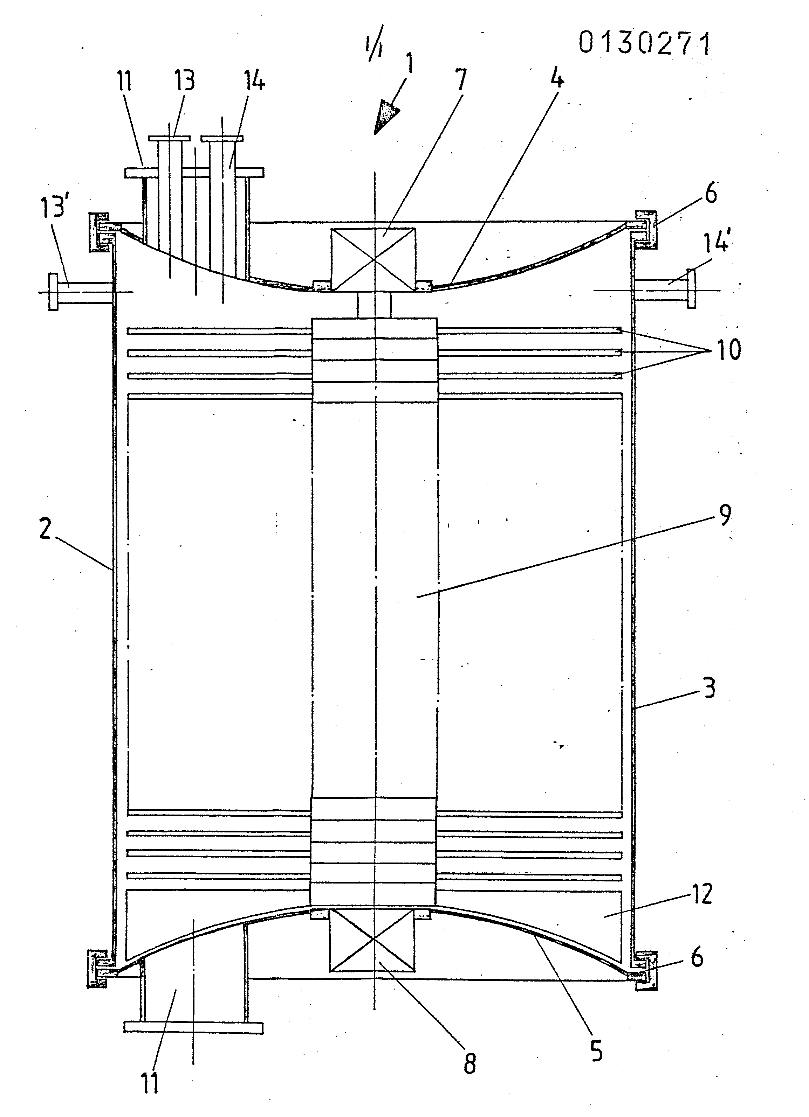

Die Erfindung ist nachstehend anhand der Zeichnung beispielsweise näher erläutert. Diese zeigt in der einzigen Figur einen Schnitt durch einen Rotationsfilter mit einem Gehäuse gemäß der Erfindung.

Ein Druckrotationsfilter 1 weist ein allgemein mit 2 bezeichnetes Gehäuse auf, welches von einem zylindrischen Mantel 3, einem oberen Deckel 4 und einem unteren Deckel 5 gebildet wird. Wie z. B. aus der DE-PS 25 52 515 im Falle eines Gehäusedeckels bekannt, sind der Zylindermantel 3 und der obere und untere Deckel 4 und 5 über Klammerelemente 6 mit entsprechenden Flanschen aneinander verbunden, was lediglich schematisch dargestellt ist.

Wie sich aus der Figur ergibt, ist sowohl der obere Gehäusedeckel 4 als auch der untere Gehäusedeckel 5 nach innen gewölbt und tragen in ihrem Wölbungsmittelpunkt das obere Lager 7 und das untere Lager 8 für einen nur andeutungsweise wiedergegebenen Plattenfilter 9 mit einer Vielzahl von Filterplatten 10.

Im dargestellten Beispiel weist der obere Deckel 4 und der untere Deckel 5 je einen Rohrstutzen 11 bzw. 11´ auf, der im Falle des unteren Behälterbodens 5 als Filterkuchenaustragsöffnung dient und im Falle des Behälterdeckels 4 z. B. als Suspensionszuführleitung 13 für das Filtrat dienen kann. Dort kann z. B. auch eine Entlüftungsleitung 14 angeschlossen sein. Im unteren Bereich der Filterwelle sind Ausräumer 12, wie an sich bekannt, vorgesehen, die im Falle des Abschleuderns des Filterkuchens diesen dann zur Filterkuchenaustragsöffnung 11 befördern.

Natürlich ist das beschriebene Ausführungsbeispiel noch in vielfacher Hinsicht abzuändern, ohne den Grundgedanken der Erfindung zu verlassen. So können, wie bereits erwähnt, die Entlüftungs- und Filtrateinführleitungen ebenso im Behältermantel 3 untergebracht sein wie bei entsprechend konstruktiver Gestaltung auch die Filterkuchenaustragsöffnung. Die Erfindung ist auch nicht auf eine spezielle geometrische Wölbungsform beschränkt. Hier können Kugelausschnittsflächen ebenso wie Ellipsoide u. dgl. vorgesehen sein.

0130271

Patentansprüche:

1. Gehäuse für ein Druckgefäß, insbesondere für einen Druckrotationsfilter mit einem abnehmbaren Deckel zum Ausbau der im Behälter befindlichen Elemente, dadurch gekennzeichnet,

   daß das Gehäuse (2) aus einem zylindrischen Mantel (3) und einem am zylindrischen Mantel festlegbaren oberen und unteren Deckel (4 bzw. 5) mit wenigstens bereichsweise zum Behälterinneren gerichteter Wölbung ausgebildet ist.

2. Gehäuse nach Anspruch 1,

   dadurch gekennzeichnet,

   daß der obere und untere Behälterboden (4, 5) konkav gewölbt sind und in ihrem Wölbungsmittelpunkt das Lager (7, 8) für die Filterwelle tragen.

3. Gehäuse nach Anspruch 1 oder 2,

   dadurch gekennzeichnet,

   daß im unteren Boden die Austrittsöffnung für den Filterkuchen vorgesehen ist.

4. Gehäuse nach einem der vorangehenden Ansprüche,

   dadurch gekennzeichnet,

   daß im oberen Bereich des Behältermantels (3) und/oder Behälterdeckels (4) die Anschlußstutzen für die Suspen-

0130271

sionszuführleitung (13), die Entlüftung (14) u. dgl.

angeordnet sind.

Europäisches
Patentamt

**EUROPÄISCHER RECHERCHENBERICHT**

0130271

Nummer der Anmeldung

EP 84 10 0815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-1 864 757 (KURT F. PIETSCH) * Seite 1, Zeilen 86-97; Figur 1 * --- | 1-3 | B 01 D 33/00 B 01 D 33/26 |
| A | US-A-4 221 663 (FRANK LITTLE) * Spalte 4, Zeilen 19-31; Figur 2 * --- | 1,3 | |
| A | FR-A- 528 324 (JUNG) --- | | |
| A | US-A-3 250 396 (FR. J. ARMSTRONG) --- | | |
| A,D | CH-A- 464 146 (MÜLLER) ----- | | |

RECHERCHIERTE SACHGEBIETE (Int. Cl. 3)

B 01 D

Der vorliegende Recherchenbericht wurde für alle Patentansprüche erstellt.

| Recherchenort | Abschlußdatum der Recherche | Prüfer |
|---|---|---|
| DEN HAAG | 24-09-1984 | DE PAEPE P.F.J. |